# EUROPEAN PATENT APPLICATION

(11) **EP 1 314 509 A2**
(43) Date of publication of application: **28.05.2003**
(21) Application number: 02258015.3
(22) Date of filing: 21.11.2002
(51) Int. Cl.: B23K 20/12

(54) **Friction stir welding**

(30) Priority: 27.11.2001 JP 2001360680; 27.11.2001 JP 2001360681
(71) Applicant: Kawasaki Jukogyo Kabushiki Kaisha, Kobe-shi, Hyogo 650-8670 (JP)
(72) Inventor: Saeki, Takehiko, Kasai-shi, Hyogo 675-2213 (JP); Kinoshita, Tsuneo, Takasago-shi, Hyogo 676-0805 (JP); Yamashita, Seiichiro, Kobe-shi, Hyogo 652-0801 (JP)
(74) Representative: Baldwin, Mark

(57) **Abstract**

Disclosed is a rotating tool(11) for friction stir welding capable of providing uniform welding strength by friction stir welding over the entire length of a butted portion of works(W1, W2) including tack-welded sections by excess metals(S), and method and apparatus of friction stir welding using the rotating tool(11). The rotating tool(11) for friction stir welding has a cutting blade(11A) for removing the excess metals(S). By rotating and moving the rotating tool(11) along the butted portion of the two works(W1, W2), friction stir welding is carried out while removing the excess metals(S) by using the cutting blade(11A). The rotating tool(11) is provided with a shoulder portion(14) at a tip end side of a tool body(12) and a pin(15) at a tip end of the shoulder portion(14). Two cutting blades(11A) may be symmetrically provided from the shoulder portion(14) to a tip end portion of the tool body(12).

## Description

### BACKGROUND OF THE INVENTION

### 1. Field of the Invention

The present invention relates to a rotating tool for friction stir welding which is adapted to perform friction stir welding of two works placed to be butted with each other while rotating and moving along the butted portion of the two works.

### 2. Description of the Related Art

Conventionally, there has been known a friction stir welding method as a solid phase welding method in which two works are butted and welded with less thermal distortion and a satisfactory shape precision is maintained after welding (For example, see Japanese Laid-Open Patent Application Publications Nos. Hei. 2000 - 343250, 2001 - 47258.

A rotating tool used in this friction stir welding method is configured such that a shoulder portion having a pin for friction stir welding at a tip end is connected to a tip end side of a substantially cylindrical tool body.

In the friction stir welding, the pin at the tip end of the rotating tool is directed downward and inserted into the butted portion of the two works to a predetermined depth, in which state, the rotating tool moves along the butted portion while rotating at a high speed. This causes the temperature of the butted portion to be increased by friction heat due to sliding contact with the pin and the shoulder portion, and metal friction-stirred by the high-speed rotation of the rotating tool to plastic flow between the works, i.e., at the butted portion. After the rotating tool has passed through, the butted portion loses heat source and is thereby rapidly cooled. Thus, the two works are joined. Here, the metal in a plastic flow state flows toward the opposite direction to the movement of the rotating tool while its upward flow above the works is restricted by the shoulder portion of the rotating tool, and after the pin has passed through, the corresponding portion is filled with the metal.

In general, to prevent displacement between the butted works during the friction stir welding, the butted portion of the works is tack-welded by excess metals at even intervals prior to the friction stir welding, and in this state, the friction stir welding is carried out.

As disclosed in Japanese Laid-Open Patent Application Publication No. 2000- 343250, it is also known that two works are tack-welded at even intervals over I-shaped grooves formed between the works, and then friction stir welding is performed in the sections other than the tack-welded sections.

In the friction stir welding using the excess metals, while the friction stir welding is performed over the entire length of the butted portion including the tack-welded sections, sufficient plastic flow does not occur because the pin of the rotating tool is not inserted to the predetermined depth in the tack-welded sections, and consequently, sufficient welding strength is not obtained in the tack-welded sections.

In the friction stir welding using the I-shaped grooves, the friction stir welding is not performed in the tack-welded sections, and therefore, the resulting weld strength is weaker than the weld strength obtained by the friction stir welding using the excess metals. Besides, since it is necessary to move the rotating tool upwardly before each of the tack-welded sections and then move the rotating tool downwardly after passing through the tack-welded sections, the operation of the rotating tool becomes complex, which leads to increased work time and reduced work efficiency.

The rotating tool disclosed in Japanese Laid-Open Patent Application Publication No. 2001- 47258 is adapted to carry out friction stir welding of the works while exerting a downward force on burr occurred during the friction stir welding, and is incapable of removing the excess metals while the rotating tool is moving.

### SUMMARY OF THE INVENTION

The invention provides a rotatable tool for friction stir welding of two works, placed to be butted with each other by rotating and moving along a butted portion of the two works, the butted portion being tack-welded by excess metals before the friction stir welding, the rotating tool is characterized in that comprising:
a cutting blade rotating and moving along the butted portion, for removing the excess metals while the friction stir welding is performed.

The invention also includes a method for performing friction stir welding of two works placed to be butted with each other by rotating and moving a rotating tool along a butted portion of the two works, the butted portion being tack-welded by excess metals before the friction stir welding; the method is characterized in that comprising the step of:
removing the excess metals while the friction stir welding is performed by rotating and moving the rotating tool.

The invention also includes an apparatus of friction stir welding of two works placed to be butted with each other by rotating and moving a rotating tool along a butted portion of the two works, the butted portion being tack-welded by excess metals before the friction stir welding, the apparatus is characterized in that comprising:
a cutting blade adapted to remove the excess metals while the friction stir welding is performed by rotating and moving the rotating tool.

The friction stir welding of the two works can be carried out while removing the excess metals by rotating and moving the rotating tool for friction stir welding along the butted portion of the two works placed to be butted with each other after the butted portion is tack-welded by the excess metals. Herein, the tack welding by the excess metals includes melting welding such as TIG welding and MIG welding.

In the described embodiments, in order to remove the excess metals, a cutting blade adapted to rotate and move along with the rotating tool is used.

With such a configuration, a pin of the rotating tool is inserted into the butted portion of the works to a predetermined depth and the rotating tool is rotated and moved along the butted portion of the works, which are friction-stir-welded while the excess metals of the tack-welded sections are removed by, for example, the cutting blade. Therefore, uniform plastic flow is caused to occur and uniform welding strength of the stir friction welding can be obtained over the entire length of the works (butted portion) including the tack-welded sections. Besides, since the tack-welding strength can be maintained by the excess metals during the friction stir welding, the butted portion can be welded without relative displacement between the two works. Further, since the excess metals are removed while the welding is performed, the excess metals do not obstruct friction stir welding.

The rotating tool itself may have the cutting blade. In this case, the removal of the excess metals by the cutting blade and the friction stir welding of the works by the rotating tool can be accomplished at the same time merely by rotating and moving the rotating tool along the butted portion of the two works, similarly to the conventional friction stir welding.

Since there is no need for additional processing of the excess metals for the tack welding before and after the friction stir welding, time required for the friction stir welding can be significantly reduced, and consequently, work efficiency can be greatly improved.

The rotating tool comprises a cylindrical tool body, a shoulder portion provided at a tip end side of the tool body, and a pin provided at a tip end of the shoulder portion, and the cutting blade is provided from the shoulder portion to a tip end portion of the tool body. This makes it possible for the cutting blade to be provided without changing a basic shape of the conventional rotating tool. Also, while the rotating tool is rotated and moved, the excess metals removed by the cutting blade are carried away along a cutting face of the cutting blade, from the position where the friction stir welding is being performed. Because the removed excess metals do not fall onto the position where the friction stir welding is being performed, they do not affect the welding.

Preferably, a plurality of cutting blades are symmetrically provided in the rotating tool. The plurality of cutting blades symmetrically provided can smoothly remove the excess metals properly in balance. This reduces the load on the rotating tools in contrast with the case where the excess metals are removed by using a single cutting blade.

By generating inert-gas atmosphere at least over the cutting blade and its vicinity when the friction stir welding is performed while the excess metals are removed by the cutting blades, the removal of the excess metals by the cutting blades are carried out in the inert-gas atmosphere instead of in the air. Thereby, seizing of the cutting blade is avoided. The inert gas includes a nitrogen gas, an argon gas, etc.

Specifically, an opening through which the inert gas is blown out to the cutting blade and its vicinity is formed in the cutting blade or its vicinity so as to communicate with an inert gas source.

The rotating tool is installed in such a manner that, with the pin of the rotating tool directed downward, an upper portion of the rotating tool is clamped to a chuck of the friction stir welding apparatus. In this state, through a penetrating hole penetrating through the rotating tool along its rotational axis, i.e., vertical axis in the clamp state, the opening is connected to the inert gas source. In this structure, the penetrating hole of the rotating tool is connected to the gas source through a gas passage only by clamping the rotating tool to the chunk.

Further, a gas reservoir may be formed at an upper stream end of the penetrating hole of the rotating tool. Thereby, the inert gas flowing through the gas passage from the gas source is supplied to the gas reservoir and is then sufficiently blown out to the cutting blade and its vicinity through the opening. Consequently, the inert gas can be supplied without delay.

### BRIEF DESCRIPTION OF THE DRAWINGS

In order that the invention may be well understood, an embodiment thereof, which is given by way of example only, will now be described with reference to the drawings, in which:
Fig. 1 is a perspective view showing an entire configuration of a friction stir welding apparatus according to an embodiment of the present invention;
Fig. 2 is a partial front view showing a rotating tool for use in the friction stir welding apparatus in Fig. 1;
Fig. 3 is a bottom view of the rotating tool in Fig. 2;
Fig. 4 is a longitudinal sectional view showing a structure of the rotating tool in the friction stir welding apparatus in Fig. 1 and a chuck to which the rotating tool is clamped;
Fig. 5 is a view showing an operation of the rotating tool in Fig. 1; and

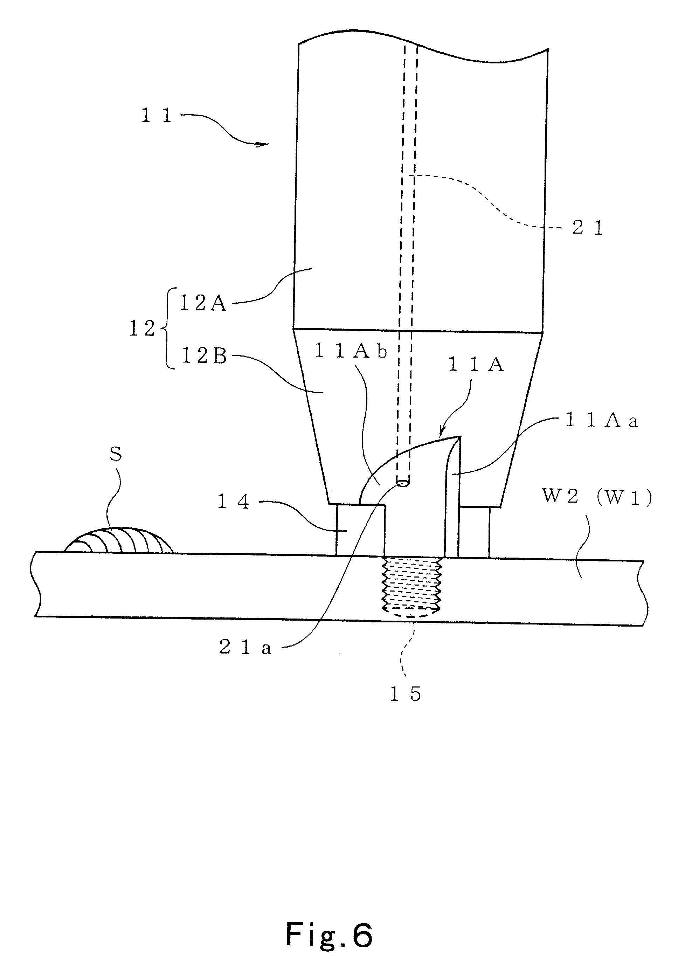

Fig. 6 is a view showing the operation of the rotating tool in Fig. 1.

### DETAILED DESCRIPTION OF THE PREFERRED

### EMBODIMENTS

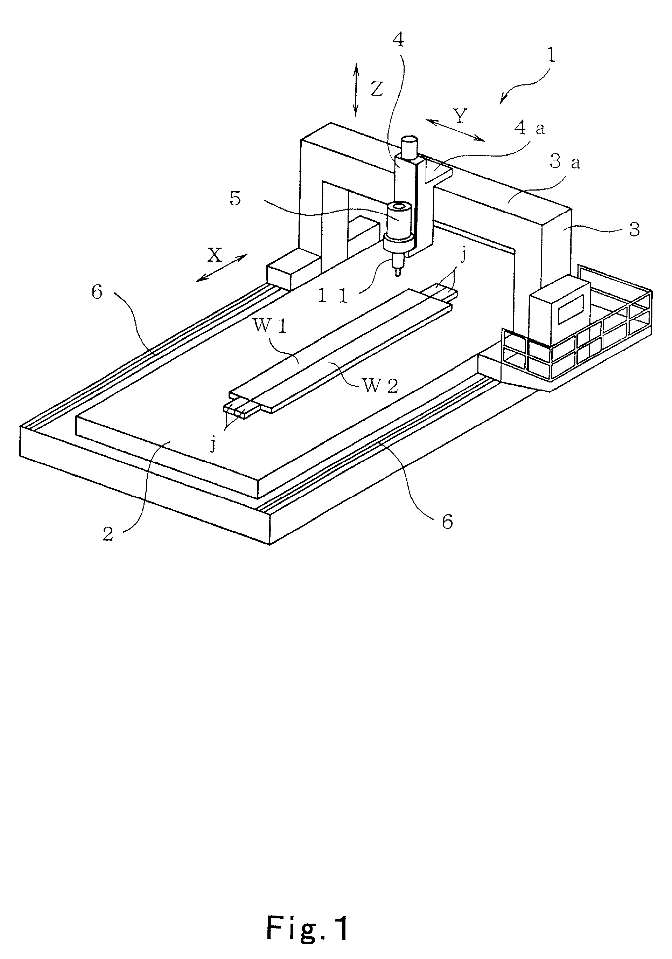

As shown in Fig. 1, a friction stir welding apparatus 1 according to this embodiment comprises a flat bed 2 of a rectangular shape that is long in longitudinal or front and rear direction (X-direction). On the bed 2, long-plate-shaped works W1, W2 to be joined are placed along the X-direction. On both sides of the bed 2 in lateral direction (Y-direction), a pair of rails 6 are provided to extend in parallel with each other along the X-direction. A gate-shaped frame 3 spanning over the bed 2 in the Y-direction is provided to be movable along the rails 6.

The gate-shaped frame 3 is provided with a movable member 4 at a horizontal frame portion 3a constituting an upper portion thereof. The movable member 4 is movable along the Y-direction on the horizontal frame portion 3a by a slider 4a provided in the movable member 4. The movable member 4 is provided with a joint head 5 that is movable in the vertical direction (Z-direction).

The joint head 5 contains a motor (not shown) in an upper portion thereof, and is provided with a rotating tool 11 for friction stir welding rotatably driven by the motor, at a lower end portion of the head 5.

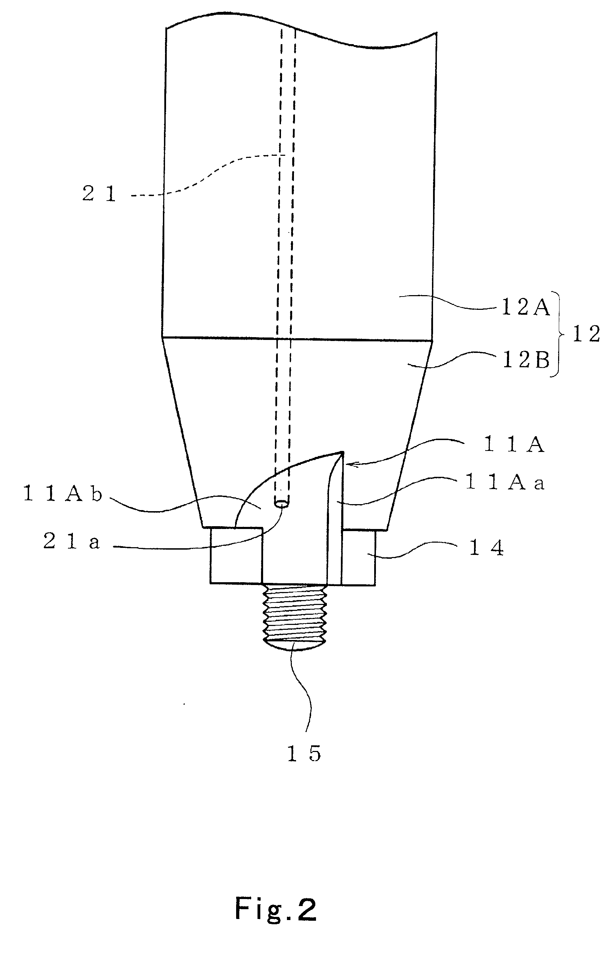

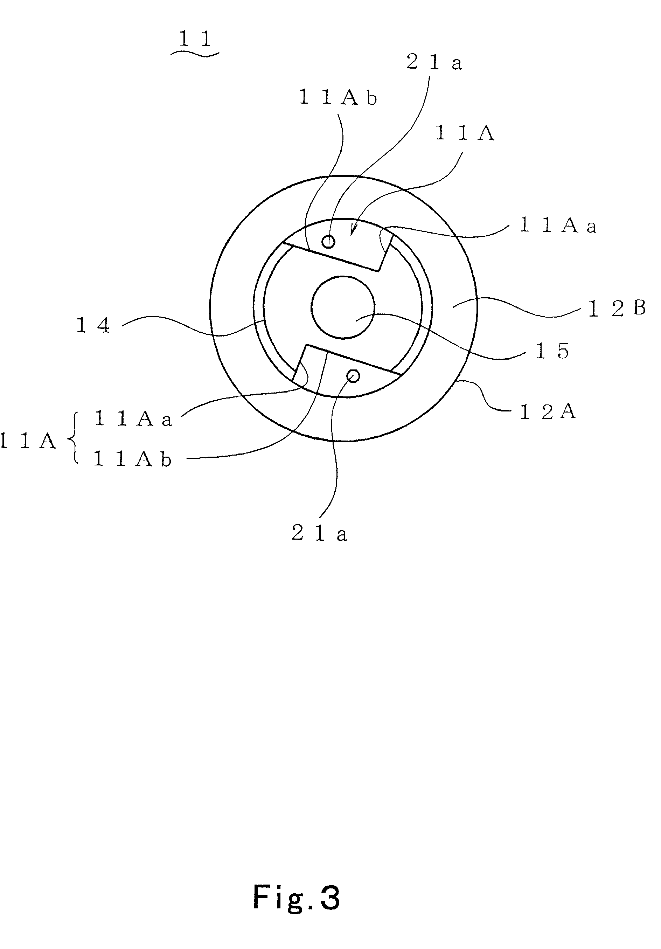

As shown in Figs. 2 and 3, the rotating tool 11 is configured such that a taper portion 12B is connected to a cylindrical portion 12A so as to extend from a tip end (lower end) of the cylindrical portion 12A. The cylindrical portion 12A and the taper portion 12B constitute a tool body 12. A cylindrical shoulder portion 14 is connected to a lower end portion of the taper portion 12B. A pin 15 for friction stir welding is protruded from a center portion of a tip end face of the shoulder portion 14. Here, the shoulder portion 14 and the pin 15 are connected coaxially with the tool body 12.

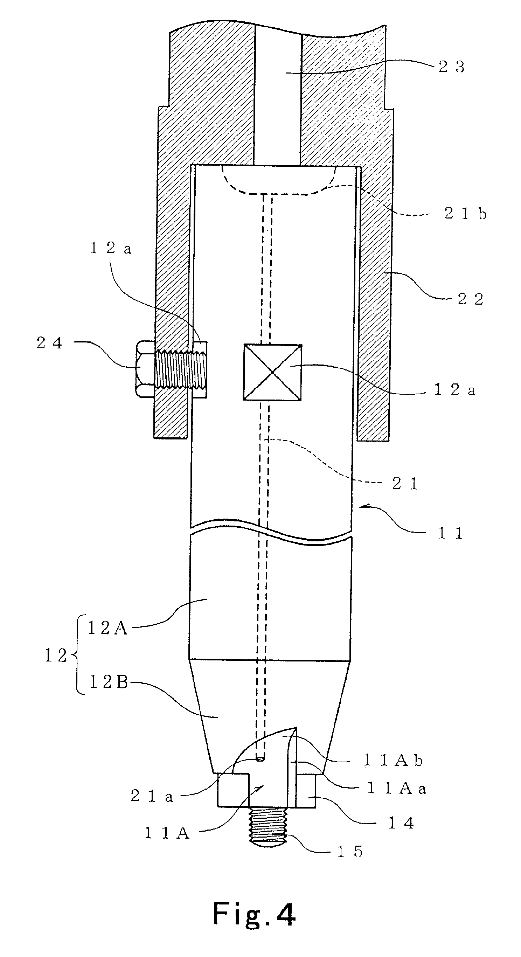

From the shoulder portion 14 to the taper portion 12B, specifically, from the lower end of the shoulder portion 14 to an arbitrary position of the taper portion 12B, one or a plurality of (for example, two) cutting blades 11A are symmetrically provided for removing excess metals S (see Fig. 4). The cutting blades 11A of the rotating tool 11 are capable of removing the excess metals S during the friction stir welding.

As shown in Fig. 3, the cutting blades 11A are each constituted by a combination of two cutting faces 11Aa, 11Ab that form substantially 90 degrees at their tip end sides, and the cutting face 11Ab is curved such that depth of cut becomes smaller as it is away from the tip end.

As shown in Fig. 2, the cutting blades 11A can be formed from the shoulder portion 14 to the taper portion 12B in a simple manner without changing a basic shape of the conventional rotating tool. In addition, by symmetrically providing the plurality of cutting blades 11A in the rotating tool 11, the removal of the excess metals S can be well-balanced.

Since the tip ends of the cutting blades 11A conform to the tip end face (lower end face) of the shoulder portion 14, the cutting blades 11A do not damage the surfaces of the works W1, W2 while the pin 15 is inserted into the butted portion of the works W1, W2 to a predetermined depth, and rotating and moving.

The rotating tool 11 is made of a material harder and more rigid than a material of the works W1, W2. The works W1, W2 may, for example, be aluminum alloy parts.

As shown in Fig. 4, the rotating tool 11 is configured such that the cylindrical portion 12A of the tool body 12 is provided with a concave portion 12a to which a tip end of a bolt 24 is applied, and a base end portion (upper end portion) of the cylindrical portion 12A is removably clamped to a chuck 22 provided in the joint head 5 by means of a plurality of bolts 24, although only one is illustrated in Fig. 4.

The rotating tool 11 is provided with an atmosphere generating means for generating inert gas atmosphere over the cutting blades 11A and their vicinity during the friction stir welding. The atmosphere generating means has openings 21a provided in the cutting blades 11A or their vicinity, for example, in the vicinity of base portions of the cutting blades 11A. Through the openings 21a, the inert gas is blown out to the cutting blades 11A and their vicinity. The openings 21a are downstream end openings of penetrating hole(s) 21 penetrating the rotating tool 11 along its rotational axis.

The chuck 22 is provided with a gas passage 23 connected to a gas source (not shown) of the inert gas, and the gas passage 23 communicates with a gas reservoir 21b located at an upper stream end of the penetrating holes 21.

The mere clamping of the base end portion of the rotating tool 11 to the chuck 22 enables the rotating tool 11 to be connected to the gas source of the inert gas through the gas passage 23, so that the inert gas can be supplied to the cutting blades 11A and their vicinity.

The gas passage 23 permits flow of the inert gas and is controlled to flow the inert gas at a predetermined amount when the rotating tool 11 is clamped to the chuck 22. On the other hand, when the rotating tool 11 is removed from the chuck 22, the gas passage 23 is controlled to block the flow of the inert gas.

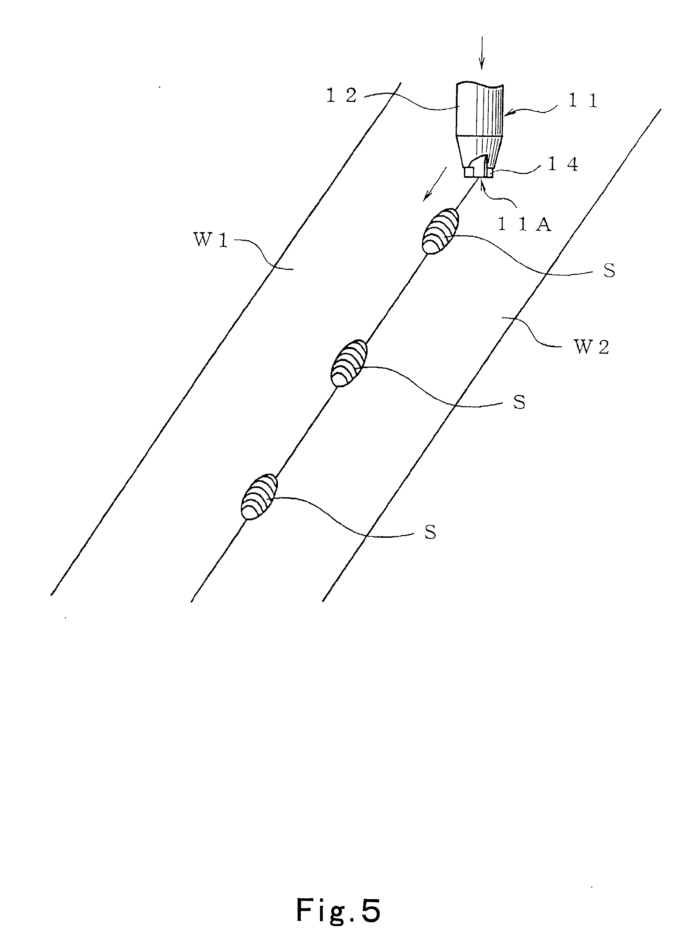

The friction stir welding apparatus of this embodiment is constituted as described above, and is adapted to carry out the friction stir welding as described below. First, as shown in Fig. 1, the works W1, W2 are fixed by means of a jig (not shown) such that their longitudinal sections are butted with each other. In this state, the butted portion is tack-welded by the excess metals S (see Fig. 5) at even intervals. This tack-welding is performed by using a material similar to that of the works W1, W2. As shown in Fig. 1, two tab plates j are welded to both ends of the works W1, W2, and the butted portion of the tab plates j is also welded.

Subsequently, the gate-shaped frame 3 is moved along the X-direction, thereby moving the joint head 5 above and along the butted portion of the works W1, W2. While the joint head 5 is moved, the rotating tool 11 is rotated and moved along the butted portion under the condition in which its pressuring force is controlled.

During this operation, as shown in Fig. 5, the pin 15 of the rotating tool 11 rotates at a high speed in the state in which the pin 15 is inserted into the butted portion of the works W1, W2, while the two cutting blades 11A are removing the excess metals S. Simultaneously, the temperature of the butted portion is increased by friction heat generated by sliding contact with the pin 15 and the shoulder portion 14, thereby causing metal friction-stirred by the rotation of the pin 15 to plastic flow between the works W1, W2. After the pin 15 has passed through, the works W1, W2 are rapidly cooled because of the losses of heat source, and are thereby joined.

While the cutting blades 11A are removing the excess metals S, an inert gas is blown out through the openings 21a in the vicinity of the base portions of the cutting blades 11A and evenly supplied over from the base portions to the tip end portions of the cutting blades 11A and the area around them.

In this manner, the rotating tool 11 rotates to cause the cutting blades 11A to rotate to thereby remove the excess metals S, while ensuring tack-welding strength so as not to affect the friction stir welding. Since the cutting blades 11A are provided from the shoulder portion 14 to the taper portion 12B, the excess metals S removed by the cutting blades 11A are carried away from the joint portion along the cutting faces 11Aa, 11Ab of the cutting blades 11A. This follows that the excess metals S removed by the cutting blades 11A does not interfere with the friction stir welding of the butted portion of the works W1, W2.

While the excess metal S is removed, the metal is stirred by the high-speed rotation of the pin 15, and the resulting metal in a plastic flow condition is carried away toward the opposite direction to the movement of the pin 15 while its upward flow is restricted by the shoulder portion 14 of the tool 11. After the pin 15 has passed through, the corresponding portion is filled with the metal. In this way, friction stir welding is performed. Since the rotating tool 11 moves while removing the excess metal S by the cutting blades 11A, the tack-welding strength of the works W1, W2 can be maintained while friction stir welding takes place.

It will be appreciated that since the rotating tool 11 operates such that friction stir welding is performed by using the pin 15 while the excess metal S is removed by the cutting blades 11A, it can be moved with the pin 15 inserted to the predetermined depth over the entire length of the butted portion of the works W1, W2 without additional processing of the excess metal S. This reduces time required for friction stir welding and significantly improves work efficiency.

Regardless of the presence of the excess metal S at even intervals, uniform plastic flow can be caused to occur over the entire length of the butted portion of the works W1, W2. As a result, uniform welding strength can be obtained over the entire length of the butted portion.

Since an inert gas is supplied to the cutting blades 11A which are removing the excess metal S, the removal of the excess metal S is performed by the cutting blades 11A in an inert-gas atmosphere instead of in air. In this way seizing of the cutting blade 11A is avoided.

Since an inert gas is supplied from the gas source to the gas reservoir 21b having a large volume through the gas passage 23, and is then blown out to the cutting blades 11A and their vicinity, sufficient amount of inert gas can be supplied.

The number of the cutting blades 11A may be three or more, or may be one, instead of two as indicated.

The two cutting blades 11A may be provided only at the shoulder portion 14 of the rotating tool 11, rather than from the shoulder portion 14 to the taper portion 12B. Alternatively, a cutting blade may be provided independently of the shoulder portion 14, or may be provided independently of the rotating tool 11 and adapted to move together with the rotating tool 11.

While the inert gas is blown out through the openings 21a provided in the rotating tool 11 in this embodiment, a nozzle for blowing out the inert gas to the cutting blades 11A and their vicinity may be provided independently of the rotating tool 11. In that case, the nozzle moves along the butted portion of the works W1, W2 together with the rotating tool 11.

In this embodiment, the gas passage 23 is released when the rotating tool 11 is clamped to the chuck 22, in which released state, the rotating tool 11 is connected to the gas source. Alternatively, a valve may be provided in the gas passage 23 and opened after clamping to allow the rotating tool 11 to be connected to the gas source.

It will be appreciated that the embodiments provide a rotating tool for friction stir welding with which uniform welding strength by the friction stir welding can be obtained over the entire length of works (butted portion) including tack-welded sections, and a method and apparatus of friction stir welding using the rotating tool.

When friction stir welding is carried out by rotating and moving the rotating tool along a butted portion of works, a pin of the rotating tool can be inserted to a predetermined depth over the entire length of the butted portion and uniform welding strength can be obtained there, by moving the rotating tool while removing excess metals of the tack-welded sections.

## Claims

1. A rotating tool for friction stir welding of two works(W1, W2) placed to be butted with each other by rotating and moving along a butted portion of the two works(W1, W2), the butted portion being tack-welded by excess metals(S) before the friction stir welding, the rotating tool(11) is **characterized in that** comprising:
a cutting blade(11A) rotating and moving along the butted portion, for removing the excess metals(S) while the friction stir welding is performed.

2. The rotating tool according to Claim 1, further comprising:
a cylindrical tool body(12);
a shoulder portion(14) formed at a tip end side of the tool body(12); and
a pin(15) provided at a tip end of the shoulder portion(14), wherein
the cutting blade(11A) is provided from the shoulder portion(14) to a tip end portion of the tool body(12).

3. The rotating tool according to Claim 1, wherein a plurality of cutting blades(11A) are symmetrically provided in the rotating tool(11).

4. The rotating tool according to Claim 1 to 3, wherein an opening(21a) through which an inert gas is blown out is formed in the cutting blade(11A) and its vicinity so as to communicate with a gas source of the inert gas.

5. The rotating tool according to Claim 4, wherein the opening(21a) is formed in the cutting blade(11A) or its vicinity.

6. A method for performing friction stir welding of two works(W1, W2) placed to be butted with each other by rotating and moving a rotating tool(11) along a butted portion of the two works(W1, W2), the butted portion being tack-welded by excess metals(S) before the friction stir welding; the method is **characterized in that** comprising the step of:
removing the excess metals(S) while the friction stir welding is performed by rotating and moving the rotating tool(11).

7. The method according to Claim 6, wherein the rotating tool(11) is adapted to remove the excess metals(S) by a cutting blade(11A) rotating together with the rotating tool(11).

8. The method according to Claim 7, wherein the rotating tool(11) comprises a cylindrical tool body(12), a shoulder portion(14) formed at a tip end side of the tool body(12), and a pin(15) provided at a tip end of the shoulder portion(14), and the cutting blade(11A) is provided from the shoulder portion(14) to a tip end portion of the tool body(12).

9. The method according to Claim 7, wherein a plurality of cutting blades(11A) are symmetrically provided in the rotating tool(11).

10. The method according to Claim 7, further comprising the step of:
generating inert gas atmosphere at least over the cutting blade(11A) and its vicinity when the friction stir welding is performed while the excess metals(S) are removed by the cutting blade(11A).

11. The method according to Claim 7 to 10, wherein the cutting blade(11A) is provided in the rotating tool(11).

12. An apparatus of friction stir welding of two works(W1, W2) placed to be butted with each other by rotating and moving a rotating tool(11) along a butted portion of the two works(W1, W2), the butted portion being tack-welded by excess metals(S) before the friction stir welding, the apparatus(1) is **characterized in that** comprising:
a cutting blade(11A) adapted to remove the excess metals(S) while the friction stir welding is performed by rotating and moving the rotating tool(11).

13. The apparatus according to Claim 12, wherein the rotating tool(11) comprises a cylindrical tool body(12), a shoulder portion(14) formed at a tip end side of the tool body(12), and a pin(15) provided at a tip end of the shoulder portion(14), and wherein
the cutting blade(11A) is provided from the shoulder portion(14) to a tip end portion of the tool body(12).

14. The apparatus according to Claim 12, wherein a plurality of cutting blades(11A) are symmetrically provided in the rotating tool(11).

15. The apparatus according to Claim 12, further comprising:
an atmosphere generating means(21, 21a, 21b) for generating inert gas atmosphere at least over the cutting blade(11A) and its vicinity.

16. The apparatus according to Claim 15, wherein the atmosphere generating means(21, 21a, 21b) has an opening(21a) provided in the cutting blade(11A) or its vicinity, and an inert gas is blown out to the cutting blade(11A) and its vicinity through the opening(21a).

17. The apparatus according to Claim 16, wherein the opening(21a) is connected to a gas source of an inert gas through a penetrating hole(21) penetrating the rotating tool(11) along a rotational axis thereof.

18. The apparatus according to Claim 16 or 17, wherein the atmosphere generating means(21, 21a, 21b) has a gas reservoir(21b) formed at an upstream end of the penetrating hole(21).

19. A rotatable tool for friction stir welding to produce butt welds between two parts (W1, W2), said tool comprising an insertion portion (15) which, in use, is inserted into and moved along between the parts while being rotated at high speed to cause localised melting of the parts, and cutting means (14), or means for removably clamping such cutting means, which cutting means is provided for removing tack weld material (s) protruding from the parts (W1, W2) ahead of the insertion portion (15) as the tool is moved along between the parts.

20. A method of butt welding by friction stir welding two parts (W1, W2) joined in abutting relationship by a plurality of tack welds (s), the method comprising inserting an insertion portion (15) of a rotatable tool into and between the two parts while rotating the insertion portion at high speed to cause localised melting of the parts and moving cutting means (14) along with said insertion portion such that the cutting means removes material from said tack welds (s) that protrudes from the parts (W1, W2) ahead of the insertion portion.

21. Apparatus for friction stir welding two parts (W1, W2) to produce a butt weld between the parts joined by tack welds (s), said apparatus comprising insertion means (15) to be inserted into and between said parts (W1, W2) and moved along between the two parts while being rotated at high speed so as to cause localised melting of the parts and cutting means (14) movable with said insertion means (15) to remove material from said tack welds that protrudes from said parts.
